Europäisches Patentamt

European Patent Office

Office européen des brevets

(11) Numéro de publication: **0 050 591**
**B1**

(12) **FASCICULE DE BREVET EUROPEEN**

(45) Date de publication du fascicule du brevet:
03.07.85

(21) Numéro de dépôt: **81810416.8**

(22) Date de dépôt: **19.10.81**

(51) Int. Cl.⁴: **A 61 C 8/00**

(54) **Implant destiné à servir de pilier dans une bouche.**

(30) Priorité: **20.10.80 CH 7810/80**

(43) Date de publication de la demande:
**28.04.82 Bulletin 82/17**

(45) Mention de la délivrance du brevet:
**03.07.85 Bulletin 85/27**

(84) Etats contractants désignés:
**AT BE DE FR GB IT NL SE**

(56) Documents cités:
**FR - A - 2 179 157**
**FR - A - 2 350 824**
**FR - A - 2 374 019**
**US - A - 3 579 831**

(73) Titulaire: **CBS Biotechnic SA, 18, quai Maria Belgia,**
**CH-1800 Vevey (CH)**

(72) Inventeur: **Sandhaus, Sami, Dr., 4, Avenue de Provence,**
**CH-1007 Lausanne (CH)**

(74) Mandataire: **Dietlin, Henri et al, DIETLIN, MOHNHAUPT**
**& Cie 16, rue du Mont-Blanc, CH-1201 Genève (CH)**

## Description

L'invention a pour objet un implant endo-osseux en biocéramique destiné à servir de pilier en médecine dentaire.

Il existe sur le marché une quantité d'implants présentant des spires et susceptibles d'être vissés dans la bouche humaine. Les implants connus sur le marché ne permettent pas toujours de remplir la fonction pour laquelle ils ont été réalisés. Lorsqu'ils sont fabriqués en métal, ils peuvent être attaqués par les liquides se trouvant dans la bouche humaine (sang, salive, etc.) et/ou provoquer des phénomènes de rejet. Lorsqu'ils ne présentent pas de phénomènes de rejet, ils doivent encore rester fermement ancrés dans la bouche du patient.

Le brevet US 3 579 831 décrit un implant dentaire de forme simple, notamment de forme cylindrique, qui peut être réalisé soit en métal, soit en matière plastique, soit dans une céramique. Cet implant comprend un pas de vis sur la moitié de sa longueur, ce qui n'est pas suffisant pour assurer une bonne rétention dans une bouche. Ceci est d'ailleurs confirmé par le fait qu'il a été prévu des aiguilles traversant l'implant et se fichant dans les tissus de part et d'autre du dit implant. D'autre part, le pas de vis forme une arête coupante, de sorte que lorsqu'on exerce une tension latérale sur l'implant, ces arêtes coupantes du pas de vis peuvent se frayer un chemin dans les tissus conjonctifs dans lesquels l'implant est vissé. L'implant décrit dans le brevet US 3 579 831 présente le long du pas de vis une rainure destinée à rendre autofiletant le dit pas de vis. Cette rainure est cependant trop fine pour pouvoir participer à l'effet de maintien de l'implant dans le tissu conjonctif où celui-ci est vissé.

L'implant décrit dans le brevet US 3 579 831 provoquera très probablement des phénomènes de rejet s'il est réalisé en métal. Ce fait est maintenant connu et universellement admis. Or, il est impensable de prévoir les aiguilles qui le traversent et qui sont destinées à l'ancrer dans une autre matière que du métal.

Le but de la présente invention est de proposer un implant qui ne provoque pas de phénomènes de rejet et qui donne toutes les garanties d'ancrage nécessaires, c'est-à-dire qui reste fermement ancré dans la bouche où il a été vissé.

L'implant selon l'invention, comprend une tête et une partie centrale de forme cylindrique ayant le même diamètre sur toute sa longueur, cette partie centrale comportant des spires sur sa surface cylindrique et une encoche, s'étendant sur tout le diamètre de son extrémité opposée à la tête, chaque spire présentant une surface de contact destiné à venir en contact direct avec l'os, suivie d'une surface en tronc de cône, elle-même suivie d'une surface d'appui aboutissant à la surface de contact de la spire suivante, les surfaces de contact, en tronc de cône et d'appui se succédant de haut en bas sur l'implant qui est caractérisé en ce que la surface de contact de chaque spire est cylindrique, en ce que la surface d'appui est concave avec un profil de section droite en arc de cercle, et en ce que les spires s'étendent sur toute la longueur de la partie centrale de forme cylindrique.

L'encoche placée à l'extrémité de l'implant opposée à la tête et s'étendant sur tout son diamètre, de même que les espaces situés entre les spires de l'implant serviront de zones de décompression au sang coagulé qui s'est amoncelé après que l'implant ait été vissé dans le trou préalablement foré par le praticien. Cette zone de décompression évitera des élancements désagréables pour le patient dans un premier temps et dans un deuxième temps se transformera en fibres conjonctives. Après une période d'environ six mois, ces zones seront complètement transformées en matière calcique. Cette matière calcique servira de soutien à l'implant le long de sa surface cylindrique portant les spires, ainsi qu'à son extrémité inférieure, à l'endroit de l'encoche.

De préférence, l'encoche est une fente en forme de V d'un angle de 60° environ.

Selon un mode d'exécution préféré, l'implant présente une longueur de 20 mm et un diamètre de 5 mm, au moins cinq spires complètes s'étendant sur sa partie centrale, les spires présentant un pas de 2 mm. Selon un autre mode d'exécution, l'implant présente une longueur de 15 mm, un diamètre de 4 mm, au moins sept spires complètes s'étendant sur sa partie centrale, les spires présentant un pas de 1,5 mm et une profondeur de 0,25 mm.

Le dessin représente, à titre d'exemple, un mode d'exécution d'un implant réalisé en céramique et destiné à servir de pivot pour l'art dentaire, selon l'invention.

Dans le dessin:

La fig. 1 est une vue de côté d'un premier mode d'exécution d'un implant,

la fig. 2 est une vue frontale de l'implant de la fig. 1,

la fig. 3 est une vue d'une coupe longitudinale le long de l'axe de l'implant de la fig. 1 montrant la forme des spires de l'implant, la fig. 3 étant représentée à plus grande échelle que la fig. 1, et

la fig. 4 est une vue partiellement en coupe de côté, d'une variante de l'implant des fig. 1 et 2.

L'implant 1 représenté dans le dessin comprend une tête 2, une partie centrale 3 présentant des spires et une partie d'extrémité 4 allant en s'amincissant légèrement relativement à la partie centrale.

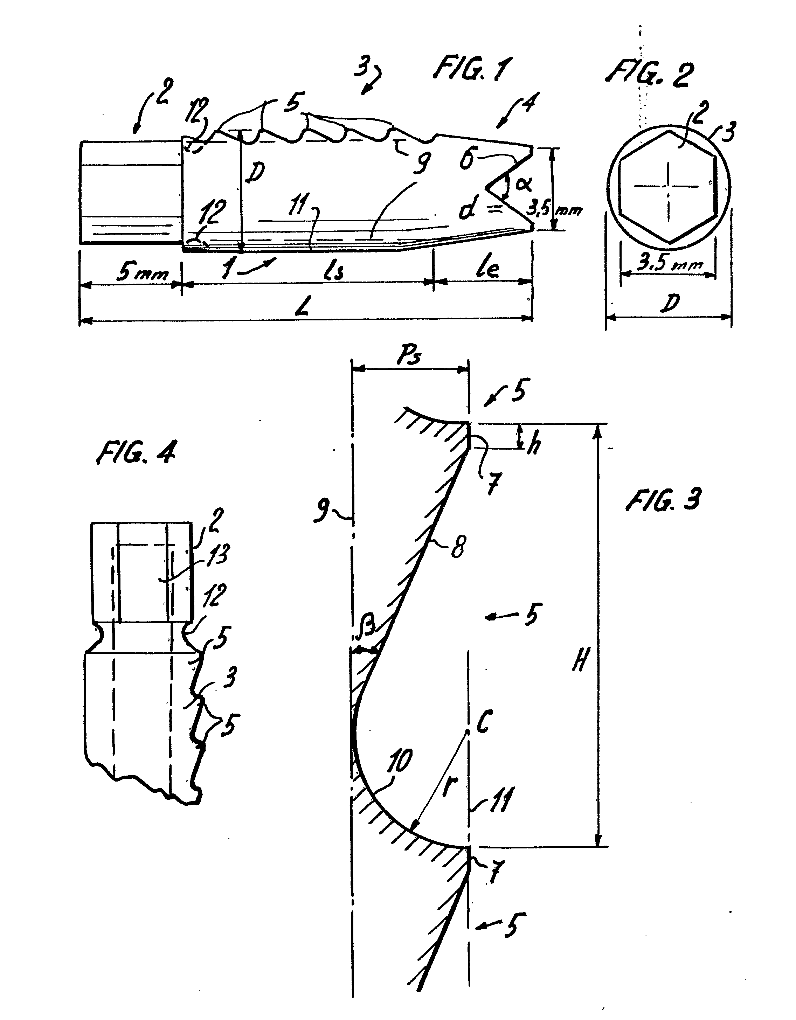

La tête 2 de l'implant présente une hauteur de 5 mm et une largeur entre deux pans opposés de la tête hexagonale de 3,5 mm. Il est évident qu'il est prévu pour le mode d'exécution décrit en regard des fig. 1 à 3 plusieurs modèles d'implants de différente grandeur (longueur, diamètre, nombre de spires, etc.). Cependant, les têtes hexagonales 2 présentent toujours les mêmes dimensions – hauteur 5 mm et largeur entre deux pans hexagonaux parallèles de 3,5 mm – de manière à ce que tous les modèles puissent être manipulés avec les mêmes outils, notamment les mêmes clés. Le modèle décrit dans les fig. 1 à 3 est un implant d'un diamètre D de 5 mm et d'une longueur totale L de 20 mm. Comme représenté dans la fig. 1, il présente cinq spires complètes 5 s'étendant sur une longueur $l_s$ de 10 mm environ. Son extrémité 4 s'étend après la fin de la dernière spire sur une longueur $l_e$ d'environ 5 mm et va en s'amincissant jusqu'à un diamètre d de 3,5 mm. Elle présente une encoche 6 formant un angle intérieur α d'environ 60°. L'encoche est réalisée de manière à s'étendre aussi loin que possible dans l'implant tout en tenant compte des impératifs inhérents à la solidité des parois de l'implant. Elle aura au moins 1 mm de profondeur dans le mode d'exécution de 20 mm de longueur représenté dans le dessin. Dans la fig. 1, les cinq spires 5 ne sont représentées que sur le côté supérieur de l'implant. Les spires 5 ont une profondeur $P_s$ de 0,55 mm (fig. 3) et un pas H de 2 mm. En allant du haut vers le bas de l'implant, les spires 5 présentent une surface cylindrique 7 d'une hauteur h de 0,2 mm suivie d'une partie en tronc de cône 8 formant un angle β de 23° avec l'axe de l'implant et se prolongeant sensiblement jusqu'au moment où la partie en tronc de cône 8 arrive à proximité de la ligne en pointillé 9 située à la distance $P_s$ = 0,55 mm du pourtour de l'implant. A la partie 8 succède une partie en arc de cercle 10 dont le centre C est placé sur le manteau cylindrique extérieur 11 de l'implant et dont le rayon est de 0,5 mm. Après la partie en arc de cercle 10, on retrouve la surface cylindrique 7 de la spire suivante. La forme des spires qui vient d'être décrite en combinaison avec les dimensions et le nombre de spires données plus haut, notamment la longueur L = 20 mm, le diamètre D = 5 mm et l'encoche 6 de 60° de la partie d'extrémité 4 permettent d'obtenir un implant particulièrement bien adapté pour la bouche humaine.

Comme mentionné plus haut, la titulaire ne peut se limiter à la fabrication de l'implant d'un diamètre de 5 mm décrit en regard des fig. 1 et 2. Elle doit bien évidemment proposer un jeu de plusieurs modèles d'implants de grandeurs et dimensions différentes, afin que le praticien puisse choisir un modèle en fonction de la bouche du patient et dans celle-ci l'endroit où l'implant doit être placé. La titulaire propose ainsi un jeu de quatre modèles d'implants: deux implants d'un diamètre de 5 mm et deux implants d'un diamètre de 4 mm.

Le premier modèle d'implant d'un diamètre de 5 mm et d'une longueur L de 20 mm est celui qui vient d'être décrit en détail en regard des fig. 1 et 2.

Le deuxième implant a également un diamètre de 5 mm, mais une longueur totale L de 15 mm. Dans cette variante de 15 mm, la tête 2 et la partie arrière 4 ayant respectivement une longueur de 5 mm, il reste une longueur $l_s$ pour les spires de 5 mm. L'implant d'un diamètre de 5 mm et d'une longueur L de 15 mm aura donc environ 2½ spires d'un pas H de 2 mm et d'une profondeur de 0,55 mm.

La titulaire a réalisé sur les mêmes bases un troisième et un quatrième modèle d'un diamètre plus petit de 4 mm. Le troisième, respectivement quatrième modèle non représenté dans le dessin est d'une longueur L de 20 mm, respectivement 15 mm et d'un diamètre D de 4 mm. Ils présentent tous deux une tête hexagonale 2 et une partie d'extrémité identiques à celles de l'implant 1 représenté dans les fig. 1 à 3 du dessin. Il comprend sept spires, respectivement 3½ spires, complètes d'un pas H de 1,5 mm et d'une profondeur $P_s$ de 0,25 mm. La forme des spires est semblable à celle de l'implant représenté dans les fig. 1 à 3 avec des surfaces 7 d'une hauteur de 0,1 mm, un rayon r d'arc de cercle 10 de 0,2 mm et un diamètre d'extrémité d de 2,6 mm.

Les quatre modèles d'implants qui viennent d'être décrits présentent une forme très élaborée qui est le résultat de plusieurs années de travail et de mise au point. Cette forme très particulière n'est pas due au hasard, mais est l'aboutissement logique du développement de l'implant en fonction des critères biologiques et physiologiques du corps humain, en particulier de la bouche humaine. Comme décrit plus haut, la partie terminale 4 de l'implant va en s'amincissant et son extrémité présente une fente 6 appelée fente fibro-conjonctive. Cette extrémité qui va en s'amincissant ainsi que la fente 6 n'est pas due au hasard, mais a des considérations biologiques et physiologiques. L'implant 1 est destiné à être mis en place dans la bouche à l'intérieur d'un trou de même diamètre préalablement foré avec une mèche par le praticien. Lorsque l'implant a été vissé dans le trou préalablement foré, la fente 6 sert de zone de décompression au sang coagulé qui s'est amoncelé à l'intérieur de la dite fente. Cette zone de décompression donne la tranquillité à l'implant et évite des élancements désagréables pour le patient. Dans cette zone de décompression, le sang coagulé se transforme avec le temps en fibres conjonctives et après une période d'environ 6 mois, on constate que cette zone a été transformée en matière calcique. En résumé, dans une première phase la fente permet la compensation physiologique de la matière, et dans une seconde phase la rétention biomécanique, qui est un phénomène de blocage de l'implant au moyen de la matière calcique. La fente permet donc une décompression dans un premier temps et empêche ensuite l'implant de se dévisser pendant la phase de cicatrisation et après. La partie d'extrémité 4 qui va en s'amincissant permet au praticien de visser l'implant avec facilité. La fente 6 se présente dans le mode d'exécution des fig. 1 à 3 sous forme d'un V. Il est cependant évident que cette fente sous forme d'un V peut être remplacée par une fente de forme carrée ou une fente se présentant sous forme d'un U. Le point important relativement à cette fente est qu'elle soit réalisée aussi grande que possible, c'est-à-dire qu'elle prenne tout le diamètre de l'implant, étant entendu que les caractéristiques de solidité des parois de l'implant adjacentes à la fente doivent être respectées.

La forme donnée aux spires 5 de l'implant est également importante et a de même été choisie en fonction de données biologiques et physiologiques. Les parties 8 et 10 situées entre les surfaces 7 des spires et présentant une largeur d'environ 1,5, respectivement 2 mm, sont également destinées à servir de zones de décompression, l'implant étant tenu par les surfaces 7. De même que pour la fente 6, il se place dans les spires du sang coagulé qui deviendra de la matière calcique après une période de six mois environ. Cette matière calcique retiendra l'implant, de sorte que celui-ci offrira une meilleure rétention à la traction.

La tête 2 avec ses six pans hexagonaux d'une longueur de 5 mm permet d'une part de recevoir une clé de serrage et d'autre part de répartir les charges masticatoires appliquées sur une dent qui la coiffe. La tête hexagonale 2 est d'une largeur de 3,5 mm, ce qui est suffisant pour offrir une résistance mécanique très satisfaisante.

Les implants de 4 ou 5 mm de diamètre peuvent présenter en variante une rainure circulaire représentée par un pointillé en 12 dans la fig. 1. La rainure est placée entre la tête hexagonale 2 et la partie centrale 3 et sert à permettre aux chairs de la gencive de se refermer autour de l'implant sous la tête hexagonale.

Dans la variante de la fig. 4, l'implant 1 comprend comme le mode d'exécution des fig. 1 à 3 une tête hexagonale 2, une partie centrale 3 munie des spires 5 et une rainure circulaire 12 prévue sous la tête 2. L'implant étant réalisé en céramique, il est prévu une armature métallique 13 noyée dans la céramique. Cette armature sera de préférence en acier inox ou en titane. Elle peut également, étant donné le fait qu'elle est complètement enfermée dans la céramique, être réalisée en un métal susceptible d'être magnétisé de manière à former un aimant permanent qui servira à attirer une autre pièce métallique ou magnétique non représentée qui sera noyée dans une pièce, par exemple une coiffe ou une prothèse enfilée sur la tête hexagonale.

Les quatre modèles d'implants qui viennent d'être décrits en regard des fig. 1 à 4 sont réalisés en bio-céramique dont la formule chimique est $Al_2O_3$. Les implants réalisés dans cette bio-céramique présentent un degré de pureté de 99,7%, une granulation de 2 à 3 μm, une densité de 3,94, un module d'élasticité d'environ 300 × $10^4$ kg/cm², une charge de rupture à la flexion de 5000 kg/cm², une dureté (Knoop) de 2000 et un coefficient de frottement de 0,15. Cette bio-céramique est distribuée sous le nom Stémaiox® par le groupe Rosenthal Technik AG.

L'utilisation des bio-céramiques à base d'alumine est maintenant connue comme étant la meilleure solution pour les implants, car ces bio-céramiques sont chimiquement inertes dans le milieu biologique et physiologique de la bouche humaine. D'autre part, elles présentent des qualités mécaniques de dureté et de solidité suffisantes. Elles ne conduisent pas l'électricité et ne sont pas dissoutes par les différents liquides du corps humain. D'autre part, on ne constate pas avec les bio-céramiques les phénomènes de rejet que l'on constate avec des métaux.

L'implant qui vient d'être décrit est habituellement réalisé par usinage d'une tige de bio-céramique. En variante, il peut être réalisé par frittage à partir d'une poudre d'alumine dans un moule prévu à cet effet.

Il est évident pour l'homme du métier que l'implant qui vient d'être décrit peut subir des transformations voire des améliorations sans sortir du cadre de l'invention. Par exemple, la tête hexagonale 2 peut être remplacée par une tête présentant une autre forme. Le nombre de spires 5 peut également être varié, de même que la forme de l'encoche 6, qui peut se présenter comme mentionné plus haut sous forme d'un U ou sous forme d'une encoche de forme carrée. Les dimensions de longueur, de diamètre, de pas et de la profondeur des spires peuvent être changées en fonction des utilisations que l'on veut en faire.

L'idée maîtresse de l'invention réside dans le fait que l'implant qui vient d'être décrit présente à son extrémité une encoche auusi grande que possible tout en tenant compte des propriétés mécaniques de la matière constituant l'implant. La partie terminale va en s'amincissant, de manière à permettre une introduction aisée de l'implant dans le trou foré préalablement par le praticien. Un autre point important réside dans le fait que les spires sont réalisées de manière à laisser le plus de place possible au sang et aux liquides sécrétés par les parois après le forage exécuté par le praticien dans la bouche d'un patient. Les liquides et le sang coagulé pourront ainsi se transformer en matière calcique et assurer une bonne tenue à l'implant enfoncé dans le forage.

## Revendications

1. Implant endo-osseux en biocéramique destiné à servir de pilier en médecine dentaire, cet implant comprenant une tête (2) et une partie centrale (3) de forme cylindrique ayant le même diamètre sur toute sa longueur, cette partie centrale comportant des spires (5) sur sa surface cylindrique et une encoche (6), s'étendant sur tout le diamètre de son extrémité opposée à la tête, chaque spire (5) présentant une surface de contact (7) destinée à venir en contact direct avec l'os, suivie d'une surface en tronc de cône (8), elle-même suivie d'une surface d'appui (10) aboutissant à la surface de contact de la spire suivante, les surfaces de contact (7), en tronc de cône (8) et d'appui (10) se succédant de haut en bas sur l'implant qui est caractérisé en ce que la surface de contact (7) de chaque spire est cylindrique, en ce que la surface d'appui (10) est concave avec un profil de section droite en arc de cercle, et en ce que les spires s'étendent sur toute la longueur de la partie centrale de forme cylindrique.

2. Implant selon la revendication 1, caractérisé en ce que les spires (5) sont suivies d'une partie (4) allant en s'amincissant et formant un cône d'introduction.

3. Implant selon la revendication 1, caractérisé en ce que l'encoche (6) est une fente en forme de V d'un angle de 60° environ.

4. Implant selon la revendication 1, caractérisé en ce qu'il comprend une tête hexagonale (2) d'une longueur d'au moins 5 mm.

5. Implant selon la revendication 1, caractérisé en ce qu'il présente une longueur de 20 mm, un diamètre de 5 mm, et au moins cinq spires (5) complètes s'étendant sur sa partie centrale.

6. Implant selon la revendication 1, caractérisé en ce qu'il présente une longueur de 15 mm, un diamètre de 5 mm et au moins 2½ spires (5) s'étendant sur sa partie centrale.

7. Implant selon la revendication 5 ou 6, caractérisé en ce que les spires (5) présentent un pas de 2 mm.

8. Implant selon la revendication 1, caractérisé en ce qu'il présente une longueur de 20 mm, un diamètre de 4 mm, au moins sept spires (5) complètes sur sa partie centrale.

9. Implant selon la revendication 1, caractérisé en ce qu'il présente une longueur de 15 mm, un diamètre de 4 mm et au moins 3½ spires (5) sur sa partie centrale.

10. Implant selon la revendication 8 ou 9, caractérisé en ce que les spires (5) présentent un pas de 1,5 mm.

11. Implant selon la revendication 1, caractérisé en ce qu'il comprend une armature métallique (13) noyée dans la céramique qui le constitue.

## Claims

1. Endo-osteal implant of bio-ceramics, to serve as a pillar in dental surgery, the implant having a head (2) and a cylindrical central portion (3) of the same diameter over its entire length, said central portion having spires (5) on its cylindrical surface, and a notch (6) over the entire diameter of its end opposed to the head, each spire (5) having a contact surface (7) to come into direct contact to the bone, followed by a frustoconical surface (8) which is in turn followed by a support surface (10) merging into the contact surface of the next spire, said contact surfaces (7), frustoconical surfaces (8) and support surfaces (10) succeeding downwardly on the implant, characterized by the fact that the contact surface (7) of each spire is cylindrical, that the support surface (10) is concavely shaped having a circular arc profile section, and that the spires extend over the whole length of said cylindrical central portion.

2. Implant according to claim 1, characterized by the fact that the spires (5) are followed by a tapered portion (4) forming an introduction cone.

3. Implant according to claim 1, characterized by the fact that the notch (6) is a V-notch having an angle of about 60°.

4. Implant according to claim 1, characterized by the fact that it has a heganonal head (2) whose length is at least 5 mm.

5. Implant according to claim 1, characterized by the fact that it has a length of 20 mm, a diameter of 5 mm, and at least five complete spires (5) on its central portion.

6. Implant according to claim 1, characterized by the fact that it has a length of 15 mm, a diameter of 5 mm, and at least 2½ spires (5) on its central portion.

7. Implant according to claim 5 or 6, characterized by the fact that the spires (5) have a pitch of 2 mm.

8. Implant according to claim 1, characterized by the fact that it has a length of 20 mm, a diameter of 4 mm, and at least seven complete spires (5) on its central portion.

9. Implant according to claim 1, characterized by the fact that it has a length of 15 mm, a diameter of 4 mm, and at least 3½ spires (5) on its central portion.

10. Implant according to claim 8 or 9, characterized by the fact that the spires (5) have a pitch of 1.5 mm.

11. Implant according to claim 1, characterized by the fact that it comprises a metallic armature (13) embedded into the ceramics it is made of.

## Patentansprüche

1. In Knochen einzusetzendes Implantat aus Biokeramik als Pfeiler in der Dentalmedizin, mit einem Kopf (2) und einem zylindrischen Mittelstück (3) mit überall gleichem Durchmesser, mit Windungen (5) auf der Zylinderfläche, und mit einer Kerbe (6), die über den ganzen Durchmesser an dem Ende geht, das dem Kopf entgegengesetzt ist, wobei jede Windung (5) eine Kontaktfläche (7) aufweist, die in unmittelbare Berührung mit dem Knochen kommen soll und an die sich eine Kegelstumpffläche (8) und dann eine Stützfläche (10) anschliesst, die in die Kontaktfläche der nächsten Windung ausläuft, und wobei die Kontaktflächen (7), die Kegelstumpfflächen (8) und die Stützflächen (10) auf dem Implantat von oben nach unten aufeinanderfolgen, dadurch gekennzeichnet, dass die Kontaktfläche (7) jeder Windung zylindrisch ist, dass die Stützfläche (10) konkav ist und einen Profilschnitt eines Kreisabschnitts besitzt, und dass die Windungen auf der ganzen Länge des zylindrischen Mittelstücks vorhanden sind.

2. Implantat nach Anspruch 1, dadurch gekennzeichnet, dass auf die Windungen (5) ein Teil (4) folgt, der sich verjüngt und einen Einsatzkegel bildet.

3. Implantat nach Anspruch 1, dadurch gekennzeichnet, dass die Kerbe (6) ein V-förmiger Schlitz mit einem Winkel von etwa 60° ist.

4. Implantat nach Anspruch 1, dadurch gekennzeichnet, dass es einen Sechseckkopf (2) mit einer Länge von mindestens 5 mm aufweist.

5. Implantat nach Anspruch 1, dadurch gekennzeichnet, dass es 20 mm lang ist, einen Durchmesser von 5 mm hat und auf dem Mittelstück mindestens fünf vollständige Windungen (5) trägt.

6. Implantat nach Anspruch 1, dadurch gekennzeichnet, dass es 15 mm lang ist, einen Durchmesser von 5 mm hat und auf dem Mittelstück mindestens 2½ Windungen (5) trägt.

7. Implantat nach Anspruch 5, dadurch gekennzeichnet, dass die Windungen (5) eine Steigung von 2 mm aufweisen.

8. Implantat nach Anspruch 1, dadurch gekennzeichnet, dass es 20 mm lang ist, einen Durchmesser von 4 mm hat und auf dem Mittelstück mindestens sieben vollständige Windungen (5) trägt.

9. Implantat nach Anspruch 1, dadurch gekennzeichnet, dass es 15 mm lang ist, einen Durchmesser von 4 mm hat und auf dem Mittelstück mindestens 3½ Windungen (5) trägt.

10. Implantat nach Anspruch 8 oder 9, dadurch gekennzeichnet, dass die Windungen (5) eine Steigung von 1,5 mm aufweisen.

11. Implantat nach Anspruch 1, dadurch gekennzeichnet, dass es ein in der Keramik, aus der es besteht, eingebettetes Metallgerüst (13) enthält.

FIG. 1

FIG. 2

FIG. 4

FIG. 3